# EUROPEAN PATENT APPLICATION

(11) **EP 1 769 966 A2**
(43) Date of publication of application: **04.04.2007**
(21) Application number: 06019391.9
(22) Date of filing: 15.09.2006
(51) Int. Cl.: B60N 2/36

(54) **Vehicle body structure including a seat**

(30) Priority: 30.09.2005 JP 2005287781
(71) Applicant: Mazda Motor Corporation, Aki-gun, Hiroshima 730-8670 (JP)
(72) Inventor: Hirokawa, Masato, Aki-gun Hiroshima 730-8670 (JP); Koizumi, Yoh, Aki-gun Hiroshima 730-8670 (JP); Satani, Kenji, Aki-gun Hiroshima 730-8670 (JP); Hara, Masao, Aki-gun Hiroshima 730-8670 (JP); Kohge, Yusuke, Aki-gun Hiroshima 730-8670 (JP); Watanabe, Shigeaki, Aki-gun Hiroshima 730-8670 (JP); Yoshii, Gunji, Aki-gun Hiroshima 730-8670 (JP); Matsuhashi, Kazuhiro, Aki-gun Hiroshima 730-8670 (JP); Iida, Keisuke, Aki-gun Hiroshima 730-8670 (JP); Nishino, Masaki, Aki-gun Hiroshima 730-8670 (JP); Shimada, Masato, Aki-gun Hiroshima 730-8670 (JP); Fujihara, Yoshitaka, Aki-gun Hiroshima 730-8670 (JP); Honji, Hiromasa, Aki-gun Hiroshima 730-8670 (JP); Ohta, Yuji, Aki-gun Hiroshima 730-8670 (JP); Okiyama, Hiroshi, Aki-gun Hiroshima 730-8670 (JP); Naganuma, Tsutomu, Aki-gun Hiroshima 730-8670 (JP)
(74) Representative: Müller-Boré & Partner Patentanwälte

(57) **Abstract**

A vehicle body structure of a vehicle including a seat, having a baggage compartment at a rear portion in a cabin and the seat **3,** comprises a seat back **11** supported by a hinge member provided at a lower portion of the seat **3** so as to rotate in a longitudinal direction, the seat back **11** being provided to be held in a specified upright position, a first engagement portion **30** provided at an outside end portion of the seat back **11,** a second engagement portion **35** provided at a portion of a vehicle sidewall portion **6** corresponding to the first engagement portion **30,** wherein the first and second engagement portions **30, 35** are configured to be fixed in a vehicle width direction when the seat back **11** is in the specified upright position. Thereby, a rigidity of the vehicle body can be improved by using the seat back.

## Description

The present invention relates to a vehicle body structure of a vehicle including a seat, particularly including the seat whose seat back is held in a specified (predetermined or predeterminable) substantially upright state.

It is known that a vehicle such as an automotive vehicle includes a foldable seat whose seat back can be rotated (inclined) to provide a useful space at a vehicle rear portion. Particularly, this foldable seat has been used widely in a so-called one-box type of vehicle that uses its rear space as a baggage compartment to provide a wider baggage space in it.

Herein, a structure of a striker being provided at a vehicle sidewall portion to hold the seat back of the foldable seat is also known. The seat back of the foldable seat can be held in the specified upright position by this structure of the striker.

Japanese Patent Application Laid-Open No. 11-263247 discloses a seat-back attaching structure in which there is provided a reinforcing member comprising a cross member and upright members, which are provided at a vehicle floor portion and vehicle sidewall portions, and a rear seat back is attached so as to be enclosed by this reinforcing member.

Herein, a vehicle such as the one-box type of vehicle has no member behind a rearmost row seat that extends in a vehicle width direction and separates the baggage space from a cabin space, unlike a sedan type of vehicle. Accordingly, some countermeasures for securing a sufficient rigidity at the vehicle rear portion against any vibrations or the like that may occur at the vehicle body have been required.

The present invention has been devised in view of the above-described problem, and an object of the present invention is to provide a vehicle body structure of a vehicle including a seat that can improve the vehicle body rigidity properly by using a seat back of the seat.

This object is solved by a vehicle body structure of a vehicle according to the present invention of claim 1. Preferred embodiments of the present invention are subject of the dependent claims.

According to the present invention, there is provided a vehicle body structure of a vehicle including at least one seat, in which a baggage compartment is provided at or near a rear portion in or of a cabin and the seat is provided in the cabin, comprising a seat back of the seat, the seat back being supported by at least one hinge member provided at or near a lower portion of the seat so as to rotate or pivot substantially in a longitudinal direction (or a direction at an angle different from 0° or 180°, preferably substantially normal to the longitudinal direction of the vehicle), the seat back being provided to be held in a specified (predetermined or predeterminable) substantially upright position, a first engagement portion that is provided at or near an outside end portion of the seat back, a second engagement portion that is provided at or on a portion of a vehicle sidewall portion substantially corresponding to the first engagement portion so as to engage with the first engagement portion, wherein the first and second engagement portions are configured to be fixed substantially in a vehicle width direction when the seat back is in the specified (predetermined or predeterminable) substantially upright position.

According to the present invention, since the seat can be fixed to the vehicle body surely, vibrations, stresses, or shaking that would occur at the vehicle body can be at least partly transferred to the seat back, so the rigidity of the vehicle body can be improved properly by using the seat back. Since the seat back in the specified substantially upright position is fixed in the vehicle width direction, it can be prevented from being moved improperly substantially in the vehicle width direction by the vibrations or the like.

According to an embodiment of the present invention, there are provided a striker provided at the vehicle sidewall portion and a latch provided at the seat back so as to engage with the striker, and the seat back is held in the specified upright position by engagement of the striker and latch. Thereby, the seat back can be held in the specified upright position surely and the effect described above can be attained properly. Since a relatively small striker is provided at the vehicle sidewall portion, a wider space can be provided in the cabin when the seat back is inclined (rotated or pivoted) substantially forward or the like.

According to another embodiment of the present invention, the striker comprises a lateral connecting portion that extends inside from the vehicle sidewall portion, and the latch includes a first hook and a second hook that are operative to engage with the lateral connecting portion together vertically. Thereby, since the latch is configured to engage with the striker substantially vertically (substantially in a vertical direction of the vehicle), a length of the striker extending inside can be made shorter. Thus, there can be provided a much wider space in the cabin when the seat back is inclined (rotated) forward or the like.

According to another embodiment of the present invention, a distance between the first engagement portion and the hinge member is shorter than that between the latch and the hinge member. Thereby, since the first and second engagement portions can engage with each other in an accurate position state, a secure engagement of these portions can be attained along with the engagement of the striker and the latch.

According to another embodiment of the present invention, a wheel house is provided at the vehicle sidewall portion so as to project inside, and the second engagement portion is provided above or near the wheel house. Thereby, since the second engagement portion can be disposed so as to be hidden by the wheel house, better appearances can be provided.

According to another embodiment of the present invention, the seat comprises a plurality of independent seat backs that are disposed substantially side by side (aligned or sligthly offset) substantially in the vehicle width direction, and there is provided a seat-back connecting device operative to interconnect adjacent seat backs. Thereby, since the seat backs disposed side by side can be interconnected, the vehicle-body rigidity can be further improved.

According to another embodiment of the present invention, at least one of said first and second engagement portions is provided with at least one engaging member for engagement with the other of said first and second engagement portions.

According to another embodiment of the present invention, the vehicle body structure of a vehicle including a seat further comprises a biasing member to bias the engagement member substantially forward.

According to another embodiment of the present invention, two engaging members are disposed to substantially face each other and are made of a resilient material, and preferably have taper-shaped or converging end faces that are disposed in such a manner that their ends diverging widely.

According to another embodiment of the present invention, when the seat back is in the specified (predetermined or predeterminable) substantially upright position, the first engagement portion and/or the second engagement portion pushes the engaging members substantially against the spring or resilient force, so the first engagement portion and the second engagement portion are fixed substantially in the vehicle width direction.

Other features, aspects, and advantages of the present invention will become apparent from the following description which refers to the accompanying drawings.
FIG. **1** is a perspective view schematically showing a vehicle rear body of a vehicle according to the present embodiment.
FIG. **2** is an explanatory sectional view taken along line **Y2-Y2** of FIG. **1.**
FIG. **3** is a partially-enlarged perspective view of the vehicle rear body, when viewed from a vehicle rear.
FIG. **4** is a partially-enlarged perspective view of the vehicle rear body, when viewed from a vehicle front.
FIG. **5** is an explanatory elevation view of part of a seat back.
FIG. **6** is an explanatory sectional view taken along line **Y6-Y6** of FIG. **1.**
FIG. **7** is an explanatory elevation view of a latch.
FIG. **8** is an explanatory elevation view of a second engagement portion, which is a partially-enlarged view of a support member.
FIG. **9** is an explanatory diagram schematically showing an enlarged **A** portion of a seat shown in FIG. **1.**
FIG. **10** is a perspective view of a right-side connecting member provided at a right-side seat back.

Hereinafter, a preferred embodiment of the present invention will be described referring to the accompanying drawings. It should be understood that even though embodiments are separately described, single features thereof may be combined to additional embodiments.

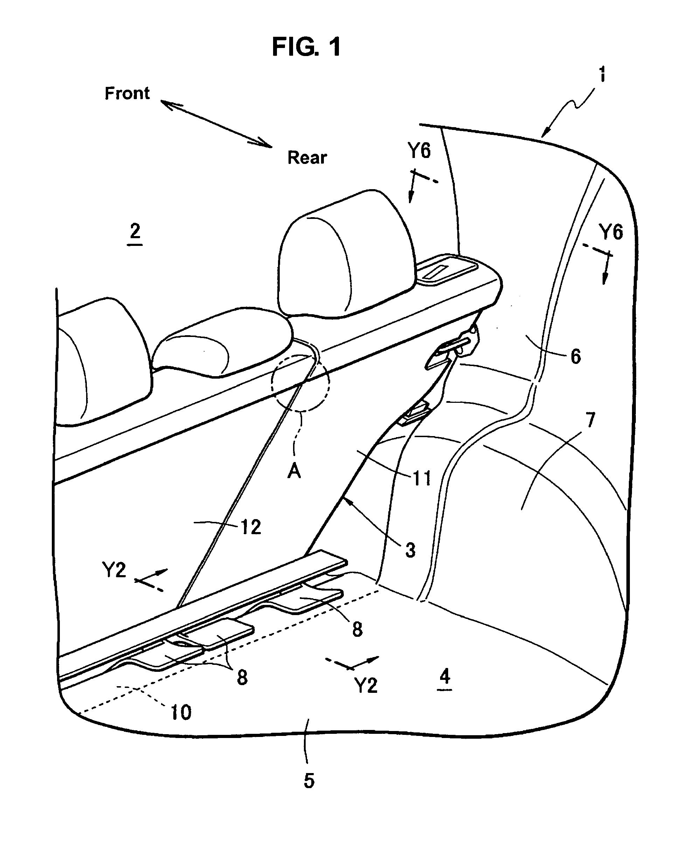

FiG. **1** is a perspective view schematically showing a vehicle rear body of a vehicle according to the present preferred embodiment. A vehicle **1** is, for example, a so-called one box or one volume or hatch type of vehicle, a baggage compartment **4** is provided in back of a seat **3** that is disposed in a vehicle cabin **2.** The vehicle rear body of the vehicle **1,** as apparent from FIG. **1,** comprises a vehicle floor portion **5** to at least partly form a floor face of the vehicle and a vehicle sidewall portion **6** to at least partly form a side face of the vehicle body.

A wheel house **7** is provided at a vehicle sidewall portion **6** so as to project substantially toward the inside of the vehicle **1,** and the seat **3** is disposed on the vehicle floor portion **5** via at least one hinge member **8.** The hinge member **8** is connected to a cross member **10** extending substantially in a vehicle width direction. A seat back of the seat **3** comprises a right-side seat back **11** and a left-side seat back **12.** Hereinafter, the right-side seat back **11** will be described mainly.

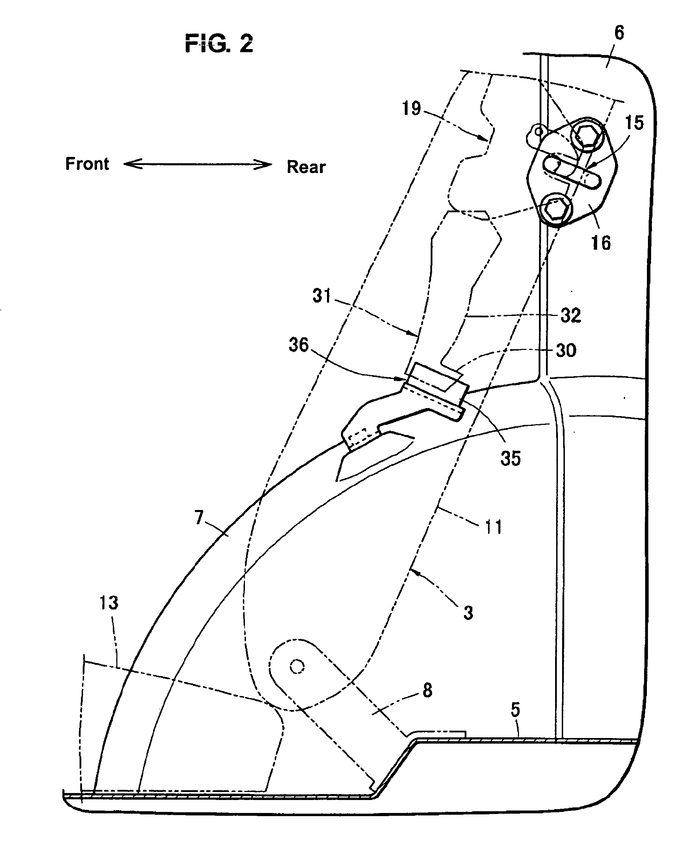

FIG. **2** is an explanatory sectional view taken along line **Y2-Y2** of FIG. **1.** Herein, the seat **3,** other parts and the hinge member **8** are shown by two-dotted broken lines in order to show the vehicle sidewall portion **6** apparently.

The seat **3** comprises a seat cushion **13** and the seat back **11,** and the seat back **11** is supported by the hinge member **8** so as to rotate or pivot in a longitudinal direction of the vehicle **1** (i.e. around a rotational or pivotal axis being substantially arranged in width direction) and be biased substantially forward by a biasing member (such as a coil spring) preferably disposed at the hinge member **8.** Herein, the hinge member **8** may be disposed below the seat **3** with a different type.

The seat back **11** can take a specified (predetermined or predeterminable) substantially upright position as shown in FIGS. **1** and **2.** In the present embodiment, the seat back **11** is disposed with an inclined angle of about 10 to about 20 degrees relative to a vertical direction. In this substantially upright position, the seat back **11** is supported by the hinge member **8** and an outside or lateral end portion of the seat back **11** is supported at the vehicle sidewall portion **6.**

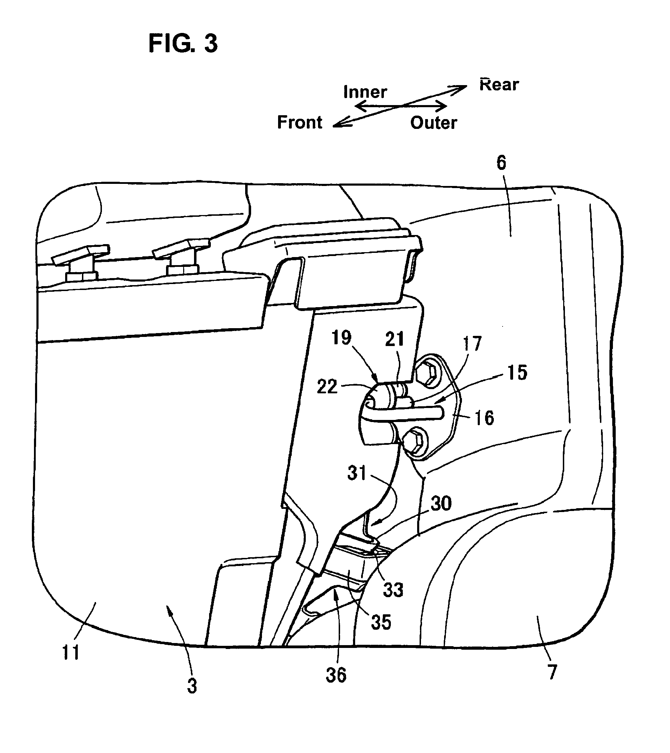

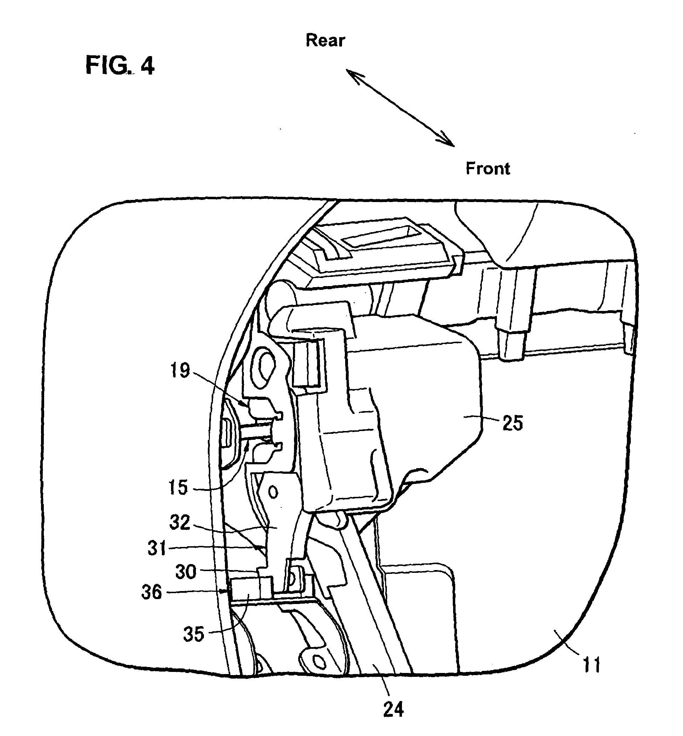

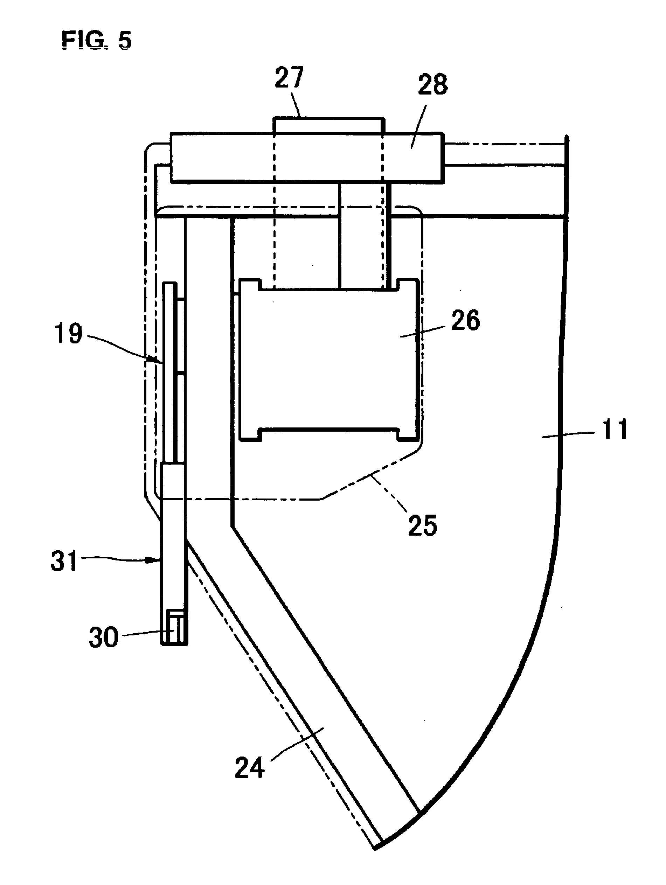

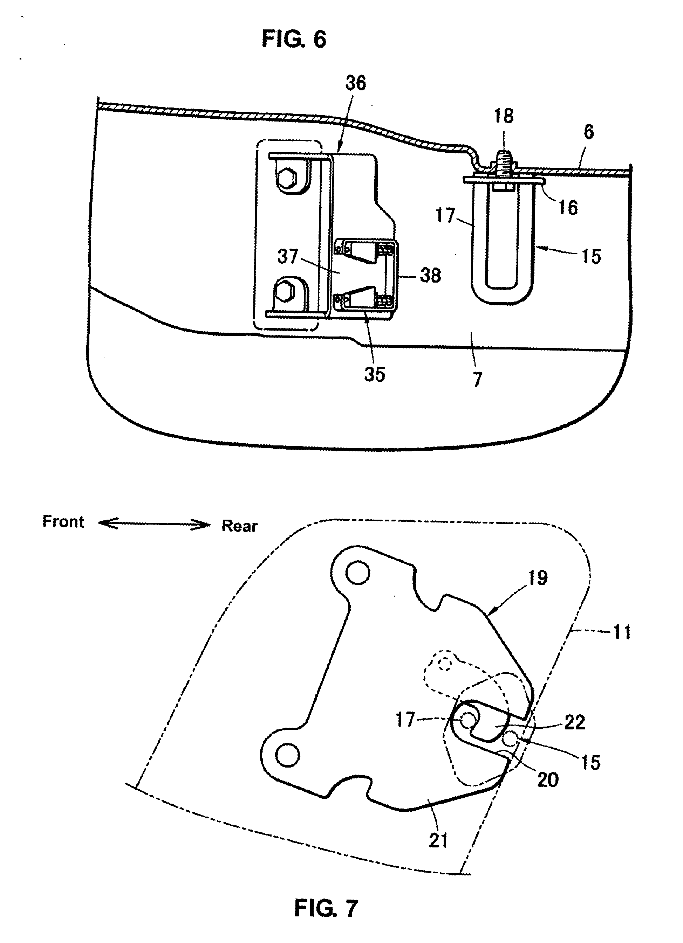

FIG. **3** is a partially-enlarged perspective view of the vehicle rear body, when viewed from a vehicle rear, FIG. **4** is a partially-enlarged perspective view of the vehicle rear body, when viewed from a vehicle front, and FIG. **5** is an explanatory elevation view of part of the seat back. Herein, these figures illustrate a state in which one or more covering members are removed from the seat back **11.** FIG. **6** is an explanatory sectional view taken along line **Y6-Y6** of FIG. **1,** which illustrates a state in which the seat **3** is removed.

As shown in FIG. **3,** a striker **15** is provided at the vehicle sidewall portion **6** near or substantially above the wheel house **7,** and the outside end portion of the seat back **11** that is in the specified (predetermined or predeterminable) upright position is supported at the vehicle sidewall portion **6** via the striker **15.** An elevation view of the striker **15** is illustrated in FIG. **2** and a side view of the striker **15** is illustrated in FIG. **6.**

The striker **15** is formed in a substantially U shape, and its both ends are connected to a striker attaching portion **16** that preferably is formed in a substantially flat-plate shape. The striker **15** includes a lateral connecting portion **17** that extends from the striker attaching portion **16** at an angle different from 0° or 180°, preferably at a substantially right angle. The striker attaching portion **16** is attached to the vehicle sidewall portion **6** via one or more fastening bolts **18** in such a manner that the lateral connecting portion **17** of the striker **15** extends substantially from the vehicle sidewall portion **6** substantially in the vehicle width direction.

Meanwhile, a latch **9** is provided at the outside end portion of the seat back **11.** FIG. **7** is an elevation view of the latch. Herein, the seat back **11** and the striker **15** are illustrated by two-dotted broken lines. The latch **19** is disposed so as to open rearward, and comprises a first hook portion **21** that includes a slot portion **20** to at least partly receive the above-described lateral connecting portion **17** of the striker **15** and a second hook portion **22** that is coupled to the first hook portion **21** and selectively engages with the lateral connecting portion **17** of the striker **15.**

These hook portions **21, 22** are formed in the substantially flat-plate shape and disposed substantially longitudinally (or opening in a longitudinal direction so as to be engageable with the striker, particularly with the striker attaching portion 16) at or near the lateral or outside end portion of the seat back **11,** respectively. The latch **19** with the first and second hook portions **21, 22** is attached via a panel-shaped attaching bracket **25** to a seat back frame **24** that is provided preferably in a rectangular shape or a reverse-U shape, when viewed from the front, so as to at least partly enclose an outer peripheral portion of the seat back **11,** as shown in FIGS. **4** and **5.** Herein, as shown in FIG. **5,** a retractor **26** is provided (directly or indirectly) at or on the attaching bracket **25,** and a seatbelt **27** is provided so as to be withdrawn forward from the retractor **26** through a withdrawal portion **28.**

The seat back **11,** which preferably is always biased substantially forward, is allowed to rotate or pivot from the front to the rear, and it can be held in the specified (predetermined or predeterminable) substantially upright position by engagement of the latch **19** with the striker **15** provided at or on the vehicle sidewall portion **6,** specifically by the first and second hook portions **21, 22** engaging with the lateral connecting portion **17** together vertically. Herein, the striker **15** is formed to be relatively small compared to the latch **19** as shown in FIG. **2.**

In the present embodiment, as shown in FIG. **3,** the seat back **11** has a wedge member **31** including a first engagement portion **30** that extends substantially rearward, which is attached at the outside end portion of the seat back **11.** And, there is provided a support member **36** including a second engagement portion **35** above the wheel house **7.** The second engagement portion **35** is configured to engage with the first engagement portion **30.**

The above-described wedge member **31** comprises a wedge bracket **32** that is attached to the seat back frame **24** preferably so as to extend substantially vertically, and at a lower end of the wedge bracket **32** is provided the first engagement portion **30** preferably substantially having a U-shaped cross section. This first engagement portion **30,** which is made of a resilient material such as rubber, is disposed such that its curve portion **33** preferably substantially having a U-shaped cross section projects rearward.

The wedge member **31** is provided substantially below or adjacent to the latch **19** at the outside end portion of the seat back **11.** Namely, the wedge member **31** is located such that a distance between the wedge member **31** and the hinge member **8** is shorter than that between the latch **19** and the hinge member **8.**

Meanwhile, the support member **36** is attached to or near a forward portion on the wheel house **7.** The second engagement portion **35** of the support member **36,** as shown in FIG. **6,** is attached to an inside portion on the wheel house **7** and includes an opening portion **37** at the front and a wall portion **38** having a substantially U-shaped cross section.

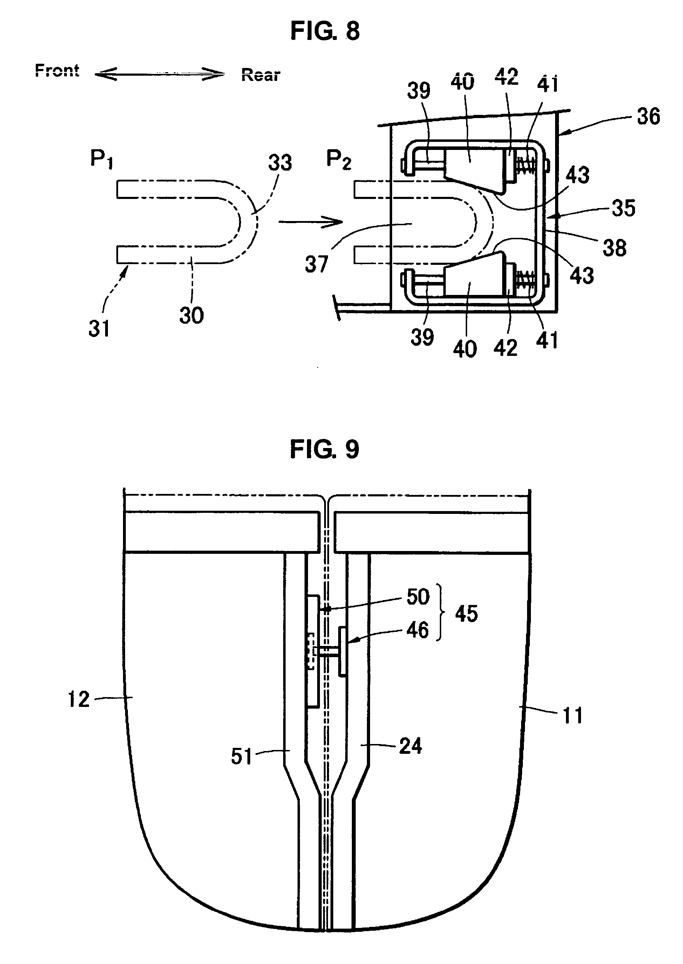

FIG. **8** is an explanatory elevation view of the second engagement portion, which is a partially-enlarged view of the support member. Herein, the first engagement portion **30** of the wedge member **31** is illustrated by a two-dotted broken line. At both end portions of the wall portion **38** of the second engagement portion **35** are respectively provided one or more rod-shaped axis members **39** extending substantially longitudinally, and respective both ends of the axis members **39** are supported at the wall portion **38.**

Each of the axis members **39** comprises an engaging member **40,** a biasing or spring member **41** to bias the engagement member **40** substantially forward, and a plate member **42** that is provided between these members **40, 41.** The two engaging members **40,** which are disposed to substantially face each other, are made of a resilient material such as rubber, and preferably have taper-shaped or converging end faces **43** that are disposed in such a manner that their front ends open widely.

When the seat back **11** is in the specified (predetermined or predeterminable) upright position, the first engagement portion **30** provided at the seat back **11** moves from **P1** position to **P2** position, as shown in FIG. **8,** and the curve portion **33** of the first engagement portion **30** is supported by the taper-shaped end faces **43** of the second engagement portion **35.** In this way, the first engagement portion **30** pushes the engaging members **40** substantially rearward against the spring or resilient force, so the first engagement portion **30** is fixed substantially in the vehicle width direction by the second engagement portion **35.**

The first engagement portion **30** preferably is configured to have the U-shaped cross section and the second engagement portion **35** preferably is configured to have one or more taper-shaped end faces **43** in the present embodiment. However, any other modifications of the first and second engagement portions **30, 35** can be applied such that the seat back **11** in the upright position and the vehicle sidewall portion **6** can be fixed in the vehicle width direction. For example, a wedge-shaped member may be applied so that its front end with taper faces can contact the end faces **43** of the engaging member **40.**

Also, although the second engagement portion **35** is provided on the wheel house **7** in the present embodiment, it may be provided near the wheel house **7.** The left-side seat back **12** preferably has the same structure at its outside end portion as the right-side seat back **11** described above.

According to the vehicle body structure of a vehicle including the seat of the present embodiment, since the seat **3** can be fixed to the vehicle body surely, vibrations, stresses or shaking that would occur at the vehicle body can be transferred to the seat back with the structure in which there are provided the first engagement portion **30** provided at the outside end portion of the seat back **11** and the second engagement portion **35** provided at the portion of the vehicle sidewall portion **6** corresponding to the first engagement portion **30,** and these engagement portions **30, 35** are configured to be fixed in the vehicle width direction when the seat back **11** is in the specified (predetermined or predeterminable) substantially upright position. Thereby, the rigidity of the vehicle body can be improved properly by using the seat back. Since the seat back **11** in the specified (predetermined or predeterminable) substantially upright position is fixed substantially in the vehicle width direction (or a direction at an angle different from 0° or 180°, preferably substantially normal to the longitudinal direction of the vehicle **1**), it can be prevented from being moved improperly substantially in the vehicle width direction by the vibrations or the like.

Also, since there are provided the striker **15** provided at or on the vehicle sidewall portion **6** and the latch **19** provided at or on the seat back **11** so as to engage with the striker **15,** and the seat back **11** is held in the specified (predetermined or predeterminable) substantially upright position by engagement of the striker **15** and latch **19,** the seat back **11** can be held in the specified (predetermined or predeterminable) substantially upright position surely and the above-described effect can be attained properly. Since the relatively small striker **15** is provided at or on the vehicle sidewall portion **6,** a wider space can be provided in the cabin when the seat back **11** is inclined forward or the like.

Further, since the latch **19** includes the first hook **21** and the second hook **22** that are operative to engage with the lateral connecting portion **17** of the striker **15** together substantially vertically, the length of the striker **15** extending inside can be made shorter. Thus, there can be provided the much wider space in the cabin **2** when the seat back **11** is inclined substantially forward or the like.

And, since the distance between the first engagement portion **30** and the hinge member **8** is shorter than that between the latch **19** and the hinge member **8,** the first and second engagement portions **30, 35** can engage with each other in a substantially accurate position state or relationship. Thus, a secure engagement of these portions **30, 35** can be attained along with the engagement of the striker and the latch.

Also, since the wheel house **7** is provided at or on the vehicle sidewall portion **6** so as to project inside and the second engagement portion **35 is** provided above or near the wheel house **7,** the second engagement portion **35** can be disposed so as to be at least partly hidden by the wheel house **7,** and thus better appearances and/or space efficiency can be provided.

Also, as described above, the seat **3** comprises the right-side seat back **11** and the left-side seat back **12** that preferably are separate from each other. FIG. **9** is an explanatory diagram schematically showing an enlarged **A** portion of a seat shown in FIG. **1.** Herein, FIG. **9** illustrates a state in which covering members are removed from the right and left seat backs **11, 12.**

A seat-back connecting device **45** to interconnect the both seat backs **11, 12** is shown in FIG. **9.** As described above, the seat back frame **24** is provided at an outer peripheral portion of the right-side seat back **11,** and a right-side connecting member **46** is provided at an inside end portion of the seat back frame **24.**

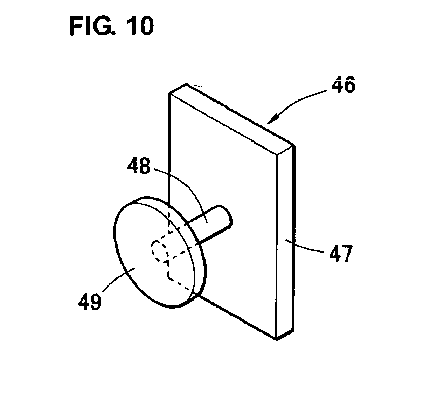

FIG. **10** is a perspective view of the right-side connecting member provided at the right-side seat back. The right-side connecting member **46** comprises a right-side connecting-member attaching portion **47** preferably formed in substantially flat-plate shape, a connecting rod portion **48** projecting from the attaching portion **47** at an angle different from 0° or 180°, preferably substantially at a right angle, and a (preferably substantially disc- or elliptic- or rounded-shaped) hat portion **49** provided at or near a tip of the portion **48.** The right-side connecting-member attaching portion **47** is attached to or near an upper portion of the inside end portion of the seat back frame **24.**

Meanwhile, at the left-side seat back **12** is provided a left-side connecting member **50** operative to engage with the right-side connecting member **46** provided at the right-side seat back **11.** The left-side connecting member **50** is (directly or indirectly) attached to the seat back frame **51** provided at an outer peripheral portion of the left-side seat back **12,** which can substantially engage with the connecting rod portion **48** of the right-side connecting member **46.**

Although the seat-back connecting device **45** comprised of the connecting members **46, 50** interconnects the both seat backs **11, 12** via the connecting rod portion **48** in the longitudinal direction in the present embodiment, it may be configured to interconnect them in the vehicle width direction like the wedge member **31** and the support member **36.**

Although the seat back **3** comprises two independent seat backs, the right-side seat back **11** and the left-side seat back **12,** in the present embodiment, it may comprise more seat backs or these right and left seat backs may be formed integrally.

As described above, since the seat **3** comprises a plurality of independent seat backs **11, 12** that are disposed substantially side by side substantially in the vehicle width direction and there is provided the seat-back connecting device **45** operative to interconnect adjacent seat backs **11, 12,** the seat backs disposed substantially side by side can be interconnected, and thereby the vehicle-body rigidity can be further improved.

The present invention should not limited to the above-described embodiment, and any other modifications and improvements may be applied within the scope of a sprit of the present invention. For example, although the present invention is applied to the one-box type of vehicle in the present embodiment, it is also applicable to any other types of vehicle in which the seat back of the seat can engage with the vehicle sidewall portion such as a sedan-type vehicle where the trunk compartment is at least partly separated from the cabin by means of the rear seats and can be made selectively open to the cabin by rotating the seat back substantially forward or by removing it altogether.

## Claims

1. A vehicle body structure of a vehicle **(1)** including at least one seat **(3),** in which a baggage compartment **(4)** is provided at a rear portion in or of a cabin **(2)** and the seat **(3)** is provided in the cabin **(2),** comprising:
a seat back **(11)** of the seat **(1),** the seat back **(11)** being supported by at least one hinge member **(8)** provided at or near a lower portion of the seat **(3)** so as to rotate substantially in a longitudinal direction, the seat back **(11)** being provided to be held in a specified upright position;
a first engagement portion **(30)** that is provided at or near an outside end portion of said seat back **(11);**
a second engagement portion **(35)** that is provided at a portion of a vehicle sidewall portion **(6)** substantially corresponding to said first engagement portion **(30)** so as to engage with the first engagement portion **(30),**
wherein said first and second engagement portions **(30, 35)** are configured to be fixed substantially in a vehicle width direction when the seat back **(11)** is in the specified upright position.

2. The vehicle body structure of a vehicle **(1)** including a seat **(3)** of claim 1, wherein there are provided a striker **(15)** provided at the vehicle sidewall portion **(6)** and a latch **(19)** provided at said seat back **(11)** so as to engage with the striker **(15),** and said seat back **(11)** is held in the specified upright position by engagement of said striker **(15)** and latch **(19).**

3. The vehicle body structure of a vehicle **(1)** including a seat **(3)** of claim 2, wherein said striker **(15)** comprises a lateral connecting portion **(17)** that at least partly extends inside from the vehicle sidewall portion **(6),** and said latch **(19)** includes a first hook **(21)** and a second hook **(22)** that are operative to engage with said lateral connecting portion **(17)** together substantially vertically.

4. The vehicle body structure of a vehicle **(1)** including a seat **(3)** of claim 2 or 3, wherein a distance between said first engagement portion **(30)** and said hinge member **(8)** is shorter than that between said latch **(19)** and the hinge member **(8).**

5. The vehicle body structure of a vehicle **(1)** including a seat **(3)** of any one of the preceding claims, wherein a wheel house **(7)** is provided at the vehicle sidewall portion **(6)** so as to project inside, and said second engagement portion **(35)** is provided above or near the wheel house **(7).**

6. The vehicle body structure of a vehicle **(1)** including a seat **(3)** of any one of the preceding claims, wherein the seat **(3)** comprises a plurality of independent seat backs **(11, 12)** that are disposed substantially side by side in the vehicle width direction, and there is provided a seat-back connecting device **(45)** operative to interconnect adjacent seat backs **(11, 12).**

7. The vehicle body structure of a vehicle **(1)** including a seat **(3)** of any one of the preceding claims, wherein at least one of said first and second engagement portions **(30, 35)** is provided with at least one engaging member **(40)** for engagement with the other of said first and second engagement portions **(30, 35).**

8. The vehicle body structure of a vehicle **(1)** including a seat **(3)** according to claim 7, further comprising a biasing member **(41)** to bias the engagement member **(40)** substantially forward.

9. The vehicle body structure of a vehicle **(1)** including a seat **(3)** according to claim 7 or 8, wherein two engaging members **(40)** are disposed to substantially face each other and are made of a resilient material, and preferably have taper-shaped or converging end faces **(43)** that are disposed in such a manner that their ends diverging widely.

10. The vehicle body structure of a vehicle **(1)** including a seat **(3)** according to claim 9, when the seat back **(11)** is in the specified upright position, the first engagement portion **(30)** and/or the second engagement portion **(35)** pushes the engaging members **(40)** substantially against the spring or resilient force, so the first engagement portion **(30)** and the second engagement portion **(35)** are fixed substantially in the vehicle width direction.
